# EUROPEAN PATENT APPLICATION

(11) **EP 0 753 263 A2**
(43) Date of publication of application: **15.01.1997**
(21) Application number: 96110815.6
(22) Date of filing: 04.07.1996
(51) Int. Cl.: A23G 7/00, A23G 7/02

(54) **Food production tunnel system, particularly for confectionery**

(30) Priority: 06.07.1995 IT TO950572
(71) Applicant: M.T.H. Manifatture Tecnolegno Hartz S.r.l., I-10040 Almese (TO) (IT)
(72) Inventor: Garrone, Giuseppe, 10040 Almese (TO) (IT)
(74) Representative: Dini, Roberto, Dr. Ing.

(57) **Abstract**

A system for realizing a food production tunnel, more in particular for confectionery products, comprising a bottom (7), a plurality of sequentially arranged covers (8) made of thermally insulating synthetic material, having a traverse upturned U-shape and which can be lifted independently from the tunnel bottom, and a conveyor band (52) to house the products, characterized in that the tunnel covers (8) are made in a composable and modular manner according to the tunnel size to be obtained.

## Description

This invention relates to a system for realizing a food production tunnel, more particularly for confectionery products, comprising a bottom, a plurality of sequentially arranged covers made of thermally insulating synthetic material, which have an overturned U-shaped traverse section and can be independently lifted from the tunnel bottom, and a conveyor band to house the products.

As known, food production tunnels, i.e. to cool, heat or dry food products, are provided with self-bearing covers made of thermally insulating material, usually foamed polyurethane, which can be either pivoted or lifted for inside inspection and/or cleaning of the tunnel.

Said covers consist of one piece conveniently shaped as an overturned U and are sequentially arranged one after the other, whereas their number varies according to the required length of the tunnel.

The dimensions of said tunnels may vary not only for their length, but also for their width or height according to the intended use.

As a result, also the dimensions of the covers need to be changed to comply with the intended function.

According to the present state of the art, these changes of cover dimensions requires availability of a considerable number of cover types, with a consequent increase of warehousing costs due to space requirement and material in stock.

Moreover, manufacture of the different types of cover requires as many tools as the types of covers required, with a further cost increase due to the execution of the equipment required and capital lock-up.

Moreover, two guides are usually required for the turnover or removal of the various covers and also to ensure an airtight sealing from inside to outside of the tunnel, which are located one on each side at the tunnel bottom all over its length, vertically to the tunnel bottom and having a rounded upper side.

Said guides support a recess whose dimensions are complementary to the guides profile, which is obtained over the bottom and all over the length of both vertical walls of each cover, and interacts with the guide to provide a hinged element.

In order to obtain an airtight sealing, the internal side of the cover vertical wall adjacent to the guide supported recess is provided to hit on the internal side of the guide obtained on the tunnel bottom.

Moreover, since the recess cbtained on the cover bottom is flared, it allows a partial rotation of the cover on the pivot formed by the guide.

However, this hinged and sealing system extending over the whole tunnel length may be subject to dimensional changes due to a change of the tunnel operating temperature, i.e. deformations may occur such as to jeopardize both the sealing and the hinged system of the covers. It should be noted, in fact, that this double sealing and hinged system extends over the whole tunnel length.

Also, during assembly of the bottom panels it is not always possible to obtain a perfect alignment of the guide for two consecutive panels; this is due to the rather large machining tolerances existing in such instances.

Therefore, said guides extending over the whole tunnel length are not suitable for a thorough cleaning of the tunnel as they retain various materials falling down from the conveyor band. As a matter of fact, such rests cannot for instance be brushed directly out of the tunnel, but need to be collected or pushed up to the tunnel end where also the guides end up.

It is the object of this invention to solve the issues described above and specifically provide a system for realizing a food production tunnel, more particularly for confectionery products, comprising a bottom, a plurality of covers made of thermally insulating synthetic material sequentially arranged, which have an overturned U-shaped traverse section and can be lifted independenty from the tunnel bottom, and a conveyor band to house the products, whose execution is simple, easy, safe and low-cost.

To said purpose it is the object of this invention to provide a system for realizing a food production tunnel, more particularly for confectionery products, comprising a bottom, a plurality of covers made of thermally insulating synthetic material sequentially arranged, which have an overturned U-shaped traverse section and can be lifted independently from the tunnel bottom, and a conveyor band to house the products, characterized in that the tunnel covers are modular and composable according to the tunnel size to be obtained.

Any further objects and advantages of this invention will become apparent from the following detailed description and annexed drawings, which are supplied only by way of a clarifying non limiting example, wherein:
- Fig. 1 shows a perspective view of a tunnel according to the known state of the art;
- Fig. 2 shows a section view of the closure and hinged system of a cover related to a tunnel according to the known state of the art;
- Fig. 3 shows a perspective view of a tunnel according to this invention;
- Fig. 4 shows a section view of an upper corner of a cover according to this invention,
- Fig. 5 shows in detail the lower end side of the side elements of a cover, its hinged system and the airtight closure of the tunnel according to this invention;
- Fig. 6 shows a lengthwise section of the coupling between two covers;
- Fig. 7 shows a section of a tunnel with cover according to the present invention.

This invention is based on the acknowledgement that the main objects to be obtained can be reached by realizing the cover elements in a composable and modular manner.

Moreover, this invention is also based on the acknowledgement that the cover sealing function is separated from the pivoting function of the cover during its opening for inspection and/or cleaning inside the tunnel.

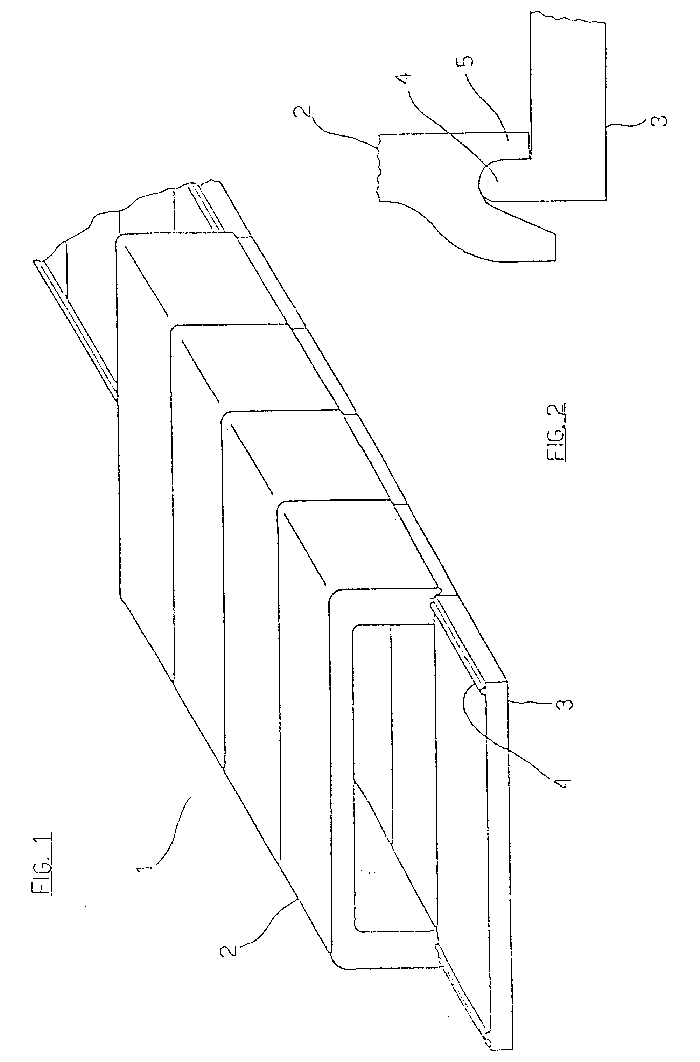

In figure 1 showing a prospective view of a tunnel according to the known state of art, reference number 1 indicates a tunnel, number 2 one of a plurality of covers forming the tunnel 1, number 3 the tunnel bottom and number 4 a supporting guide for the various covers, also acting as an airtight seal.

In figure 2 showing a section of the closure and hinged system for a cover of a tunnel according to the known state of art, reference number 3 indicates the bottom of the tunnel 1, number 4 a supporting guide for the cover, number 2 the cover and number 5 the inside of the cover matching against the guide 4 for sealing.

As it can be noticed from the figure, the special form of the recess obtained in the lower end of cover 2 allows a double function, i.e. to form a hinge together with the guide 4 for the pivoting of the cover 2 and obtain an airtight seal by interacting with the guide side 4.

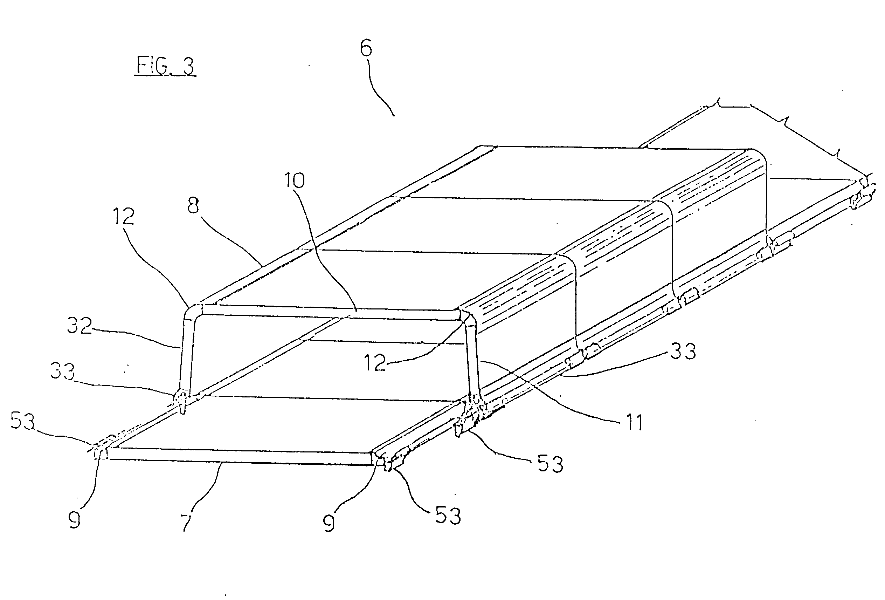

In figure 3 showing a prospective view of a tunnel according to this invention, reference number 6 indicates the tunnel as a whole, number 7 the tunnel bottom, number 8 a cover, number 53 a hinge for supporting and pivoting the cover, number 9 a profile on which sealing is obtained through the cover as more detailed later.

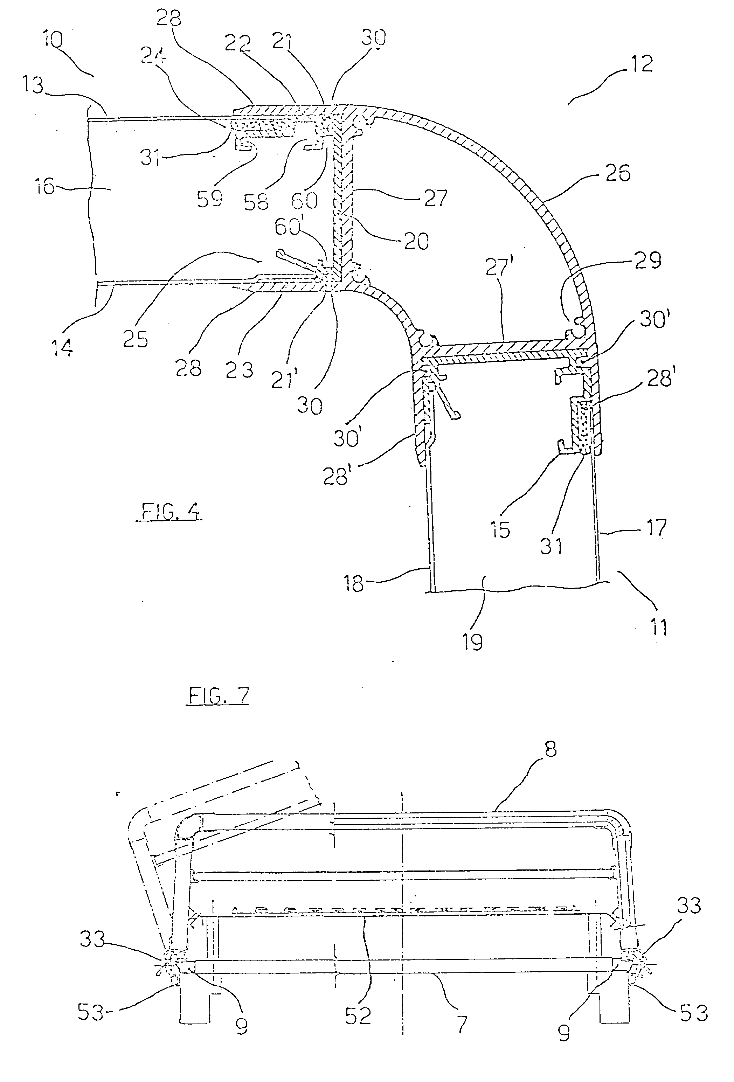

Fig. 4 shows a section view of an upper angle of a cover according to this invention; the second angle is not shown as being similar and symmetric. In this figure number 10 indicates the upper composable element of the cover (hereafter called upper element), number 11 one of the two composable side elements of the cover (hereafter called side element) and number 12 an aluminium angle profile.

The upper e!ement 10 is formed by two substantially rectangular plate sheets, indicated by numbers 13 and 14 respectively, four headers 15 - two lengthwise and two front ones - (the other ones not shown as being similar), made of aluminium profile, the whole unit made integral and stiff through the foaming of insulating material, such as foamed polyurethane, indicated by number 16.

The side element 11 (one side element is not shown as being symmetric and similar to the opposite one) is formed in the same manner as the upper element, i.e. by two plate sheets whose width is equal to that of the sheets of the upper element, indicated by 17 and 18 respectively, four haaders similar to the ones of the upper element, indicated by the same number 15, the whole unit made integral and stiff through the foaming of insulating material, such as foamed polyurethane, indicated by number 19.

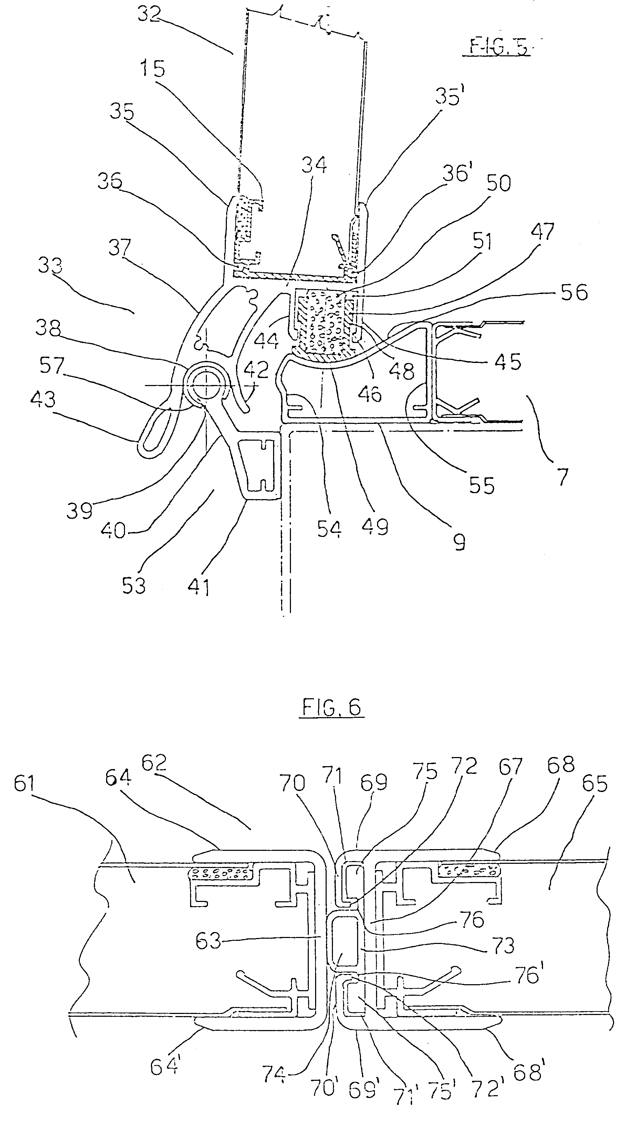

The lower section of the side elements 11 and 32 is similar to the upper section and is shown in the figure 5.

Moreover, said profile 15 has a wall 20 wherefrom a set of interconnected vertical and horizontal walls are departing to form the recesses 21, 21', 24 and 25, 58, 59, 60 and 60', and two supporting planes 22 and 23.

The recess 25 houses the plate sheet 14 inside of the upper element or 18 of the side element. For easier insertion of the sheet, the recess has a larger inlet opening in respect to its bottom.

The recess 24 is used to insert an insulating gasket 31 to reduce the heat gap that would occur between the header 15 and the outside plate sheet of the upper wall or of the side walls.

The angle profile 12, whose length is equal to the width of the side and upper elements, has a round crown area 26, with about 90° development, closed by two walls 27 and 27'.

The round crown 26 extends over the walls 27 and 27' with two small wings 28 and 28' parallel to each other and perpendicular to the walls 27 and 27'.

The distance between both wings is such to contain the thickness of the upper element 10 or of the side element 11.

The wings 28 and 28' have two ribs 30 and 30' perpendicular to the wings and parallel to the walls 27 and 27', at such a distance to build a suitable recess to house the ends of the wall 20 of both the headers of the upper element 10 and side elements 11, for the coupling of the various modular parts.

Said ribs 30 and 30' are dimensioned for insertion in the recesses 21 and 21' of the headers of the upper element 10 and side elements 11.

Said angular element 12 in the four angles of the round crown area is provided with round profiles open to the inside of the crown, indicated by number 29, to fasten a front closing cover of the angle round crown recess.

In figure 5 where the end part of the cover side elements, its hinged system and the airtight sealing of the tunnel according to this invention are shown in detail, number 32 indicates a side element of the cover and number 15 the lower header of the side element.

Number 33 indicates an aluminium profile element, whose length is equal to the width of the cover side elements, which has a base 34, wherefore two similar wings 35 and 35 depart perpendicularly, whose height and distance to each other are the same as for the wings 28 and 28' of the angular element 12.

The distance between said wings 35 and 35' is such to contain the thickness of the side element.

The wings 35 and 35' have two ribs 36 and 36' perpendicular to the wings and parallel to the base 34, at such a distance to form a recess suitable to house the ends of the wall 20 of the header 15.

Said ribs 36 and 36' are dimensioned for insertion in the recess 21 and 21' of the headers 15 of the side element 32 so as to fasten both elements to each other.

Said element 33 also has an extension 37 departing slantwise to the outside of the tunnel.

Said extension 37 has a half-round recess 38 engaging on a cylindrical section 39, connected by an extension 40 with a base 41 fastened to the tunnel basement.

Said cylindrical section 39, the extension 40 and the base 41 form the hinge 53 on which the cover 8 can be pivoted .

At least two hinges 53 substantially located towards both cover ends are used for the pivoting of each cover.

Between the half-round recess 38 and the cylinder 39 a seem-cylindrical gasket 57 made of plastic material is interposed, having an antifriction function.

The ends 42 and 43 of the extension 37 extend outside the half-round recess 38 over the axis directed outside the recess to facilitate its engagement on the cylinder 39. The outside end 43 is longer than the internal one 42 and will operate like a handle when the cover is pivoted or removed for cleaning or inspection purposes of the tunnel.

Moreover, the end 43 also has the function of delimiting cover pivoting and keep it in open position to avoid the risk of becoming loose and fall down, thus stopping the cover pivoting against the extension 40.

Said profile element 33 has an extension towards the tunnel inside formed by two walls 44 and 45, perpendicular to the base 34 and whose wall 45 is the extension of the wing 35'.

In the recess 51 resulting between the two walls 44 and 45 a profile 47 made of plastic material is inserted, which is maintained in position within the recess by two teeth 46 obtained on the ends of walls 44 and 45, and by the teeth 48 on the profile 47.

Said profile 47 is U-shaped and its outside wall 49 has the form of a round segment and is wider than the recess resulting between the teeth 46.

Inside said profile 47 a spongy gasket 50 acts like a spring, i.e. whose function is to push the profile 47 outside the recess 51.

Said outside wall 49 of the profile 47 pushed by the gasket 50 lays on a curved surface 56 having the same curving radius as the wall 49.

Thus, it is possibie to achieve a safe airtight sealing from the tunnel inside to outside, as the wall 49 always maintains its contact with the curved surface 56 of the profile element 9 through the gasket 50 acting as a spring as well.

Moreover, the seal is safe also in case of likely differences during assembly of the various elements due to machining tolerances, as they are cleared by the dimensions of the wall 49 and the thrust of the gasket 50.

Said curved surface 56 is obtained by the upper side of the substantially quadrangular section of the aluminium profile 9.

The external side 54 of the profile 9 has a lower height in respect to the opposite side 55.

Said profile 9 is mounted on the two side ends of the tunnel bottom 7 and over the whole tunnel length.

In figure 6 showing the lengthwise section of the coupling between two covers of the tunnel, number 61 indicates one of the two ends of the upper element or side elements, number 62 shows a covering aluminium profile of the header 15.

Said profile 62 is formed by a wall 63 on whose ends two similar wings 64 and 64' depart perpendicularly, which form a space between them capable of containing the thickness of the side elements or of an upper element.

The length of said profile 62 equals the width of the cover upper element or the height of the cover side elements.

On the ends of the profile 62, the wings 64 and 64' are cut at 45° for the coupling with the angles 12 and the profile element 33, which on their ends have the wings 28 and 28', 35 and 35', cut at 45°.

Number 65 indicates an end of the cover upper element or side elements, whereas number 66 indicates a covering aluminum profile for the header 15.

Said profile 66 is formed by a wall 67 on whose ends two simi!ar wings 68 and 68' depart perpendicularly, which form a space between them capable to contain the thickness of the side elements or of the upper element.

From the ends of the wall 67 two further wings 69 and 69' depart perpendicularly to the wall 67 and from the opposite side of the wings 68 e 68' resulting as their extension.

Said wings 69 and 69' are connected with two wings 70 and 70' parallel to the wall 67, thus obtaining two similar recesses 71 and 71' between the wall 67 and both wings 70 and 70'.

On the ends of said wings 70 and 70' two similar rids 72 and 72' are obtained perpendicularly to the wings, which reduce the in!et of the corresponding recess.

Number 73 indicates a gasket made of plastic material, consisting of a central bellows part 74 projecting from the outside line of the wings 70 and 70' and of two side parts 75 and 75' having a smaller thickness than the recesses 71 and 71'.

On said side parts 75 and 75' a recess 76 and 76' is obtained to house the ribs 72 and 72' to maintain the gasket in position.

Said main part 74 of the gasket 73 hits against the wall 63 of the adjacent profile 64 to obtain the sealing between two covers.

On the ends of the profile 66, the wings 68 and 68' are cut at 45° for the coupling with the angles 12 and the profile element 33 which, in their turn, have on their ends the wings 28 and 28', 35 and 35' cut at 45°.

As already described in figure 4, open holes are provided for the fastening of a cover to close the recess of the round crown of the angular element 12.

Said cover will be shaped as a round crown and is of two types. One formed by a simple plate having the same thickness of the wall 63 of the profile 62, to obtain an even plane with the profile 62.

The other cover type will also be a plate with the same thickness of the wall 67 of the profile 66, plus a gasket seat the same size as the seal on the profile 66.

In the figure 7 showing a tunnel section with a cover according to this invention, number 8 indicates a cover, number 7 the tunnel bottom, number 52 a conveyor band for the food to be handled, number 9 the side profile on the bottom for sealing purposes, number 33 the bottom profile of the side walls interacting with the hinge 53 for the cover to rotate.

Execution of the cover 8 is as follows:
- insertion of the profile 33 cut to the required length in the lower section of side elements 11 and 32 and screwed integrally with the side elements;
- joining the side elements 11 and 32 to the upper element 10 through two angular element 12 of appropriate length and screwed integrally together as a whole;
- assembly of the profiles 62 on one end and of the profiles 66 on the other end of the cover outside profiles and screw fastening;
- assembly of the closing covers of the round crown of the angular element 12, the flat type on the side mounting the profiles 62 and the type with the gasket seat on the side with profiles 66.

The characteristics of the system for realizing a food production tunnel according to this invention will be apparent from the above description and annexed drawings, as well as its advantages. In particular, said advantages consist of the following:
- easy assembly as the cover components are inserted one into the other;
- easy execution of the covers for different tunnel sizes, as it will be enough to have plate sheets available for the side and upper elements cut to the required dimensions for the specific cover type, which operation can be executed in an easy and fast manner using simple means such as a standard plate-sheet cutter,
- easy foaming of the side and upper elements without the need for costly shaped jigs, but simply a flat jig for displacement of one side either to increase or reduce the elements dimensions.
- easy procurement and stockage of materials,
- easy cleaning of the tunnel as the cover hinges do not hinder this operation,
- better hygienical conditions of the system as soil does not collect against the hinges,
- easy removal of the cover as the lower section is easier to grip thanks to the existing space between the hinges,
- easy achievement of airtight sealing from the tunnel inside to outside,
- sealing eveness all over the tunnel length.

It is obvious that many amendments and changes are possible for the man of the art to the food production tunnel described by way of example, without departing from the novelty spirit of the innovative idea.

For instance, the sheets forming the side and upper elements can be of plastic material outside and steel-sheet inside, or both in plastic material suitable for the food industry.

All aluminium profiles may be replaced by plastic material suitable for the food industry and reinforcement may be inserted if necessary inside the profiles using the seats 24, 25, 60 and 60' on the headers profile 15.

However, it is obvious, without prejudice to the principle of this invention, that many changes are possible to the manufacturing features of the food production tunnel described by way of example without departing from the novelty spirit of the innovative idea, and it is also clear that in practical actuation of the invention the forms and sizes of the components may differ from the ones described above and be replaced with technical equivalent elements.

## Claims

1. A system for realizing a food production tunnel, more particularly for confectionery products, comprising a bottom (7), a plurality of sequentially arranged covers (8) made of thermally insulating synthetic material, which have an overturned U-shaped traverse section and can be independently lifted from the tunnel bottom, and a conveyor band (52) to house the products, characterized in that the tunnel covers (8) consist of side and upper elements (10,11,32) being mutually composable by means of a plurality of composition elements (12,33), in function of the dimensions of the tunnel to be obtained.

2. A system according to Claim 1, characterized in that the composition elements (12,33) of the cover (8) comprise aluminium profiled elements.

3. A system according to Claim 1, characterized in that the side and upper elements (10,11,32) of the cover (8) are composable elements.

4. A system according to Claim 2, characterized in that said profiled element (12) is an angle profiled element having a round crown section (26), whose development is lower than 90°, enclosed between two walls (27,27'), which extends over said walls (27,27') with two wings (28,28') parallel to each other and perpendicular to said walls (27,27'), where the distance between said wings (27,27') is such to contain the thickness of the side or upper elements, said wings (28,28') having ribs (30,30') perpendicular to said wings, paral!el to said walls (27,27') and at distance from said walls (27, 27') to form a recess suitable to contain the ends of a wall (20) of the headers (15) of the upper element (10) and of the side elements (11), said ribs (30,30') being dimensioned for insertion in the recesses (21,21') of the headers (15) of said upper element (10) and said side elements (11).

5. A system according to Claim 4, characterized in that said angle profiled element (12) has in the four corners of its round crown section, circular profiles which are open to the crown inside for the fastening of a closing cover for the recess of the round crown of the said angle profiled element (12).

6. A system according to Claim 2, characterized in that said profiled element (33) has a first portion consisting of a base (34) and two similar wings (35,35') and vertical to said base (34), which contain the thickness of a side element of the cover, and a second portion consisting of an extension (37) departing slantwise towards the tunnel outside, said extension (37) having a half-round recess (38) and two wings (42,43) extending tangentially to the half-round recess (38).

7. A system according to Claim 6, characterized in that the said wing (43) external to said half-round recess (38) is longer than the internal wing (42), and that said wing (43) operates like a handle and stop for the cover pivoting and said half-round recess (38) interacts with a cylinder (39) being part of a hinge (53) forming the pivoting point of the cover (8).

8. A system, according to Claim 7, characterized in that an antifriction gasket (57) is interposed between said half-round recess (38) and said cylinder (39).

9. A system according to Claim 2, characterized in that said profiled element (33) has a third portion formed by two walls (44,45), said walls (44,45) being perpendicular to said base (34) of said first portion and one of said walls (45) being the extension of one said wing (35') of the first portion and that said walls (44,45) form a recess (51) wherein a profiled element (47) is housed.

10. A system according to Claim 9, characterized in that said profiled element (47) is U-shaped and maintained inside said recess (51) by means of teeth (46,48), that the outside wall (49) of said profiled element (47) is in the form of a circular segment and is wider than said recess (51) containing said profiled element (47).

11. A system according to Claim 10, characterized in that said profiled element (47) contains inside its U-shaped form a gasket (50) made of flexible spongy material, whose function is to push said profiled element (47) to the outside of said housing recess (51).

12. A system according to one or more of the previous Claims, characterized in that said profiled element (47) with said outside wall (49), under the thrust of said gasket (50), seals against a curved surface (56) of a profiled element (9) having about the same curving radius of said outside wall (49), that the said profiled element (9) is substantially quadrangular, said curved surface (56), where said outside wall (49) is resting, being the upper side of said quadrangular element (9), said quadrangular element (9) having a lateral side (54) shorter than the opposite lateral side (55).

13. A system according to Claim 1, characterized in that said side elements (11,32) comprise two plate-sheets (11,18), four headers (15), a gasket (31) and thermally insulated foamed material (19) and that said upper element (10) comprises two plate-sheets (13,14), four headers (15), a gasket (31) and thermally insulating foamed material (16).

14. A system according to Claim 13, characterized in that said headers (15) are made of aluminium profiled element having a wall (20), wherefrom a set of interconnected vertical and horizontal walls depart to form some recesses (21, 21', 24 and 25, 58, 59, 60 and 60'), and two supporting planes (22 e 23), one of said planes (24) being suitable to house said gasket (31), the other said recesses (21, 21') being suitable to house said ribs (30, 30') of said angle profiled element (12) and said ribs (36,36') of said lower profiled element (33).

15. A system according to Claim 1, characterized in that the profi!ed elements of said cover (8) are coated by profiled elements (62,66).

16. A system according to Claim 15, characterized in that said profiled element (62) is formed by a wall (63), that two similar wings (64,64') depart perpendicularly from the ends of said wall, said wings (64,64') being spaced from each other to contain the thickness of said side elements or of said upper element.

17. A system according to Claim 15, characterized in that said profiled element (66) is formed by a wall (67), where two first similar wings (68,68') depart perpendicularly from the ends of said wall (67), said wings (68,68') being spaced from each other to contain the thickness of said side elements or of said upper element, two second wings (69,69') departing from the ends of said wall (67) perpendicularly to said wall (67) and opposite to said first wings (68,68'), said second wings (69,69') connected to two third wings (70,70') parallel to said wall (67), forming two similar recesses (71,71') between said wall (67) and said third wings (70,70'), two similar ribs (72,72') are cbtained perpendicularly to the ends of said third wings (70,70'), said ribs (72,72') reducing the inlet of said corresponcing recess (71,71'), said recesses (71,71') housing the sides (75,75') of a gasket (73).

18. A system according to one or more of the previous Claims, characterized in that said profiled elements (9,12,15,33,62,66) are made of plastic materials.

19. A system according to Claim 18, characterized by the use of plate-sheets reinforcements housed in the recesses (60,60',58,59,25) of the headers (15) of the side and upper elements of the cover (8).

20. A system according to Claim 4, characterized in that the recess of the round crown of said angle profiled element (12) is closed by a flat cover.

21. A system, according to Claim 4, characterized in that the recess of the round crown of said angle profiled element (12) is closed by a cover having a gasket seat (73).

22. A system for realizing a food production tunnel, more particularly for confectionery products, comprising a bottom (7), a plurality of sequentially arranged covers (8) made of thermaly insulating synthetic material, which have an overturned U-shaped traverse section and can be independently lifted from the tunnel bottom, and a conveyor band (52) to house the products, characterized in that the pivoting function of the covers (8) is accomplished by means (33) which are housed on their side elements and by means (53) which are fastened on the tunnel bottom and that the sealing function between the cover ends and the tunnel bottom is cbtained through flexible means (50) and through movable elements (47) housed on the end of the cover side elements, such a function being separated from the cover pivoting function during the opening for inspection and/or cleaning purposes.
